# EUROPEAN PATENT SPECIFICATION

(11) **EP 3 726 308 B1**
(45) Date of publication and mention of the grant of the patent: **18.05.2022**
(21) Application number: 18888062.9
(22) Date of filing: 12.12.2018
(51) Int. Cl.: G05B 19/042, B60R 16/02

(54) **LOSS PREVENTION APPARATUS AND METHOD FOR VEHICLE-MOUNTED INTELLIGENT CONTROLLER, AND DEVICE**
VERLUSTVERMEIDUNGSVORRICHTUNG UND -VERFAHREN FÜR EINE FAHRZEUGMONTIERTE INTELLIGENTE STEUERUNG UND VORRICHTUNG
APPAREIL ET PROCÉDÉ DE PRÉVENTION DE PERTE D'UN DISPOSITIF DE COMMANDE INTELLIGENT EMBARQUÉ, ET DISPOSITIF

(30) Priority: 15.12.2017 CN 201711353863; 31.05.2018 CN 201810556473
(43) Date of publication of application: 21.10.2020
(73) Proprietor: NIO (Anhui) Holding Co., Ltd., Hefei City, Anhui Province (CN)
(72) Inventor: CHEN, Yingrui, Shanghai 201804 (CN); LI, Tianshu, Shanghai 201804 (CN)
(74) Representative: Patentwerk B.V.
(86) International application number: PCT/CN2018/120429
(87) International publication number: WO 2019/114715

(56) References cited:
- EP-A1- 2 241 092
- WO-A2-2016/131986
- CN-A- 105 539 579
- CN-A- 108 762 149
- CN-Y- 200 971 081
- CN-Y- 201 013 454
- US-A1- 2008 136 610

## Description

### Technical Field

The invention relates to the field of intelligent control, and in particular to a loss prevention apparatus and method for an onboard intelligent controller, and devices.

### Background Art

In the prior art, a user needs manual input to operate a vehicle. For example, if the user wants to play music or start navigation while driving, he/she needs to remove the right hand from the steering wheel to operate the corresponding device, which poses a threat to the driving safety to some extent. Moreover, the user sometimes may be in an unhealthy mood such as anger, depression, or irritability when driving a vehicle, and cannot be comforted or relieved in a timely manner.

The document CN 201 013 454 Y is considered to be the closest prior-art document.

### Summary of the Invention

In order to solve the problems above in the prior art, the invention proposes a loss prevention apparatus and method for an onboard intelligent controller, and devices, to prevent a stepper motor from being damaged as a result of being rotated beyond an extreme position or being at the extreme position for a long time where a user actively rotates an onboard intelligent controller with no knowledge of the product.

In one aspect of the invention, a loss prevention apparatus for a rotatable onboard intelligent controller is proposed, which comprises: a detection circuit, a control circuit, and a prompt circuit, wherein the detection circuit, the control circuit, and the prompt circuit are electrically connected in sequence;
the detection circuit is configured to detect whether the onboard intelligent controller rotates to an extreme position, and send the result of the detection to the control circuit; the extreme position is a preset limit position to which the onboard intelligent controller rotates;
the control circuit is configured to send an alarm instruction to the prompt circuit when obtaining the result of the detection indicating that the onboard intelligent controller rotates to the extreme position; and
the prompt circuit is configured to give a corresponding alarm prompt according to the alarm instruction from the control circuit.
Preferably, the detection circuit comprises an extreme position detection sensor in a first rotation plane and an extreme position detection sensor in a second rotation plane,
wherein the first rotation plane and the second rotation plane are two planes perpendicular to each other; and
the sensors are angle sensors and/or limit sensors.

Preferably, the first rotation plane and the second rotation plane are respectively a horizontal rotation surface of a base of the onboard intelligent controller and a vertical rotation surface of a head of the onboard intelligent controller;
the extreme position detection sensor in the first rotation plane comprises a left extreme detection sensor and a right extreme detection sensor;
the extreme position detection sensor in the second rotation plane comprises an upper extreme detection sensor and a lower extreme detection sensor;
the left extreme detection sensor and the right extreme detection sensor are respectively configured to detect whether the base of the onboard intelligent controller rotates to a left extreme position and a right extreme position; and
the upper extreme detection sensor and the lower extreme detection sensor are respectively configured to detect whether the head of the onboard intelligent controller rotates to an upper extreme position and a lower extreme position.

Preferably, the left extreme detection sensor, the right extreme detection sensor, the upper extreme detection sensor and the lower extreme detection sensor are all photoelectric sensors.

Preferably, the left extreme detection sensor and the right extreme detection sensor are arranged at extreme positions respectively when the base of the onboard intelligent controller rotates to the left and right along a horizontal plane; and the upper extreme detection sensor and the lower extreme detection sensor are arranged at extreme positions respectively when the head of the onboard intelligent controller rotates up and down along a vertical plane.

Preferably, the control circuit comprises: a microcontroller,
wherein the microcontroller is configured to: receive the result of the detection from the detection circuit, and control the prompt circuit to give a corresponding alarm prompt according to the result of the detection.

Preferably, the prompt circuit gives a prompt in one or more prompt manners; and the prompt manners comprise: a voice, lamplight, text displayed on a screen, and an expression displayed on the screen.

Preferably, the prompt circuit comprises: a display screen drive circuit, a display screen, a backlight drive circuit, a voice drive circuit and a loudspeaker,
wherein the display screen drive circuit is configured to drive, according to the instruction from the control circuit, the display screen to display the text, a graphic, or the expression;
the backlight drive circuit is configured to adjust the brightness of a backlight of the display screen according to the instruction from the control circuit; and
the voice drive circuit is configured to drive the output from the loudspeaker according to the instruction from the control circuit.

Preferably, the control circuit further comprises: a first motor drive circuit and a second motor drive circuit; and
the control circuit is further configured to: when the onboard intelligent controller rotates to the extreme position, control the first motor drive circuit to rotate a first stepper motor, thereby rotating the base of the onboard intelligent controller to a preset base position; and/or control the second motor drive circuit to rotate a second stepper motor, thereby rotating the head of the onboard intelligent controller to a preset head position.

In another aspect of the invention, a loss prevention method for a rotatable onboard intelligent controller is proposed, which comprises, based on the loss prevention apparatus for an onboard intelligent controller as described above, the following steps:
detecting whether the onboard intelligent controller rotates to an extreme position; and
outputting an alarm prompt signal if the onboard intelligent controller rotates to the extreme position.

Preferably, after "outputting an alarm prompt signal", the loss prevention method further comprises:
controlling a first stepper motor to drive a base of the onboard intelligent controller to rotate to a preset base position; and/or controlling a second stepper motor to drive a head of the onboard intelligent controller to rotate to a preset head position.

In a third aspect of the invention, a storage device is proposed, in which a plurality of programs are stored, wherein the programs are adapted to be loaded and executed by a processor, so as to implement the loss prevention method for a rotatable onboard intelligent controller as described above.

In a fourth aspect of the invention, a processing device is proposed, which comprises: a processor and a storage device,
wherein
the processor is adapted to execute various programs; and the storage device is adapted to store a plurality of programs, wherein the programs are adapted to be loaded and executed by the processor to implement: the loss prevention method for a rotatable onboard intelligent controller as described above.

The beneficial effects of the invention:

According to the invention, a high-precision photoelectric sensor is mounted at each of the left and right extreme positions when the base of the onboard intelligent controller rotates along the horizontal plane and at each of the upper and lower extreme positions when the head thereof rotates along the vertical plane, which is used to detect whether the onboard intelligent controller is rotated to the extreme position. When the photoelectric sensor is triggered, the detection circuit will send an electrical signal to the control circuit, and the control circuit notifies the prompt circuit to invoke a corresponding visual expression, text, voice or lamplight to remind a user of the risk of damage, and controls the head of the onboard intelligent controller to rotate back to the preset position. The invention effectively prevents the motor from being damaged as a result of being beyond the extreme position or being at the extreme position for a long time under the intervention of an external force.

### Brief Description of the Drawings

FIG. 1 is a schematic diagram of a mounting position of a rotatable onboard intelligent controller according to an embodiment of the invention;
FIG. 2 is a schematic composition diagram of Embodiment I of a loss prevention apparatus for a rotatable onboard intelligent controller according to the invention;
FIG. 3 is a schematic composition diagram of Embodiment II of a loss prevention apparatus for a rotatable onboard intelligent controller according to the invention; and
FIG. 4 is a schematic flowchart of an embodiment of a loss prevention method for a rotatable onboard intelligent controller according to the invention.

### Detailed Description of Embodiments

Preferred embodiments of the invention are described below with reference to the accompanying drawings. It should be understood by a person skilled in the art that these embodiments are only for explaining the technical principles of the invention and are not intended to limit the scope of protection of the invention.

In order to solve the problem in the prior art that a driver needs to manually operate devices in a vehicle, we designed an onboard intelligent controller, which is mounted inside the vehicle for convenient observation by the driver, and is provided with a rotatable head with a display screen on which text and expression information can be displayed. The onboard intelligent controller can further receive voice input from a user, and make corresponding operations according to the voice input, for example, controlling the speed of the vehicle, playing music, introducing various functions of the vehicle, and the like. The onboard intelligent controller can also detect the surrounding environment, the interior environment, human behaviors and expressions by means of sensors inside or outside the vehicle, and make corresponding operations.

In order to prevent a stepper motor from being damaged as a result of being rotated beyond an extreme position or being at the extreme position for a long time where a user actively rotates an onboard intelligent controller, the invention proposes a loss prevention apparatus and method for an onboard intelligent controller.

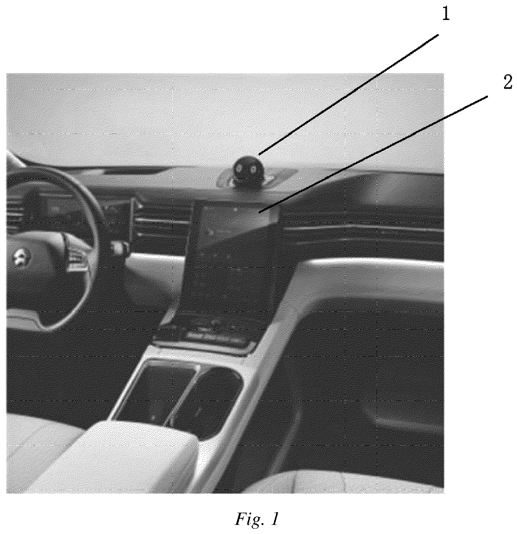

FIG. 1 is a schematic diagram of a mounting position of a rotatable onboard intelligent controller according to an embodiment of the invention. As shown in FIG. 1, an onboard intelligent controller 1 in this embodiment is exemplarily mounted above a centre console screen 2 in a cab. The onboard intelligent controller 1 is equipped with a small circular screen that can be used to display text or an expression. The onboard intelligent controller 1 is mounted with two stepper motors. The first stepper motor can drive a base of the onboard intelligent controller to rotate to the left and right along a horizontal plane (viewed from the direction of facing the centre console screen), and the second stepper motor can drive a head of the onboard intelligent controller to rotate up and down along a vertical plane. An allowable maximum angle for rotation in the horizontal direction is plus or minus 55 degrees, and an allowable maximum angle for rotation in the vertical direction is plus or minus 35 degrees. According to the allowable range, four limit positions during rotation of the onboard intelligent controller can be preset, respectively a left limit position, a right limit position, an upper limit position, and a lower limit position, which are referred to as "extreme positions". Once the onboard intelligent controller rotates beyond these extreme positions, the stepper motor may be damaged, and therefore a user needs to be reminded in time. The "centre console screen" mentioned here refers to a display screen for infotainment and navigation systems in the vehicle. FIG. 1 only exemplarily shows the mounting position of the onboard intelligent controller.

In practical applications, the onboard intelligent controller is not limited to being used only on the vehicle, instead, it can also be used in other scenarios other than on the vehicle. The onboard intelligent controller may be fixedly mounted at a position for convenient observation by the user, or may be detachably mounted at a position for convenient observation by the user. Above the centre console screen in the vehicle, a connection interface of the onboard intelligent controller may be reserved, which can be electrically or communicatively connected to the onboard intelligent controller, and the onboard intelligent controller can also be wirelessly connected to the vehicle, which is not limited herein.

In addition, the onboard intelligent controller may be placed in the vehicle as an independent apparatus or used in other scenarios other than in the vehicle. The onboard intelligent controller may comprise fixing means, which can fix the onboard intelligent controller while the vehicle is running or it is inconvenient for a user to hold. The fixing means may be internally provided with a circuit interface, which can be connected to the connection interface reserved in the vehicle, and the onboard intelligent controller may be detachably connected to the fixing means, independently of the fixing means.

### Embodiment I of loss prevention apparatus:

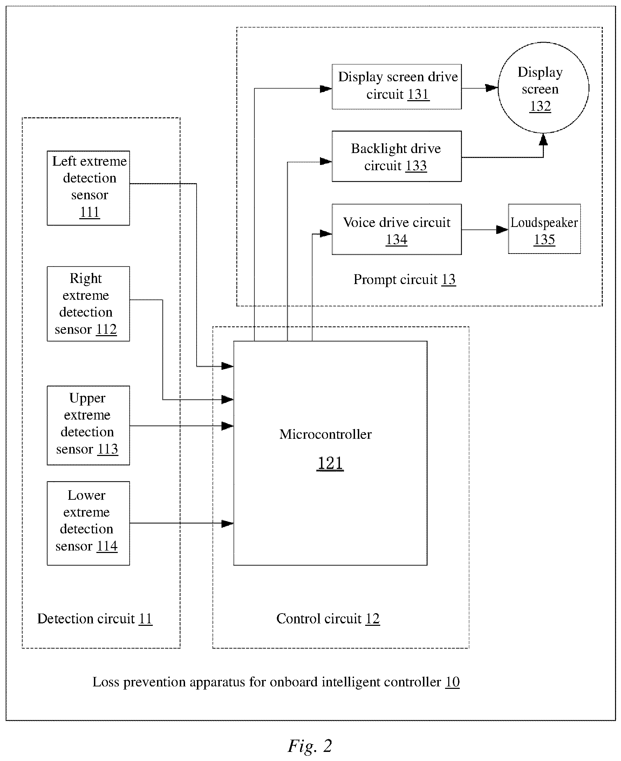

FIG. 2 is a schematic composition diagram of Embodiment I of a loss prevention apparatus for a rotatable onboard intelligent controller according to the invention. As shown in FIG. 2, a loss prevention apparatus 10 of Embodiment I comprises: a detection circuit 11, a control circuit 12, and a prompt circuit 13, wherein the detection circuit 11, the control circuit 12, and the prompt circuit 13 are electrically connected in sequence.

The detection circuit 11 is configured to detect whether the onboard intelligent controller rotates to an extreme position, and send the result of the detection to the control circuit 12; the control circuit 12 is configured to send an alarm instruction to the prompt circuit 13 when obtaining the result of the detection indicating that the onboard intelligent controller rotates to the extreme position; and the prompt circuit 13 is configured to give a corresponding alarm prompt according to the alarm instruction from the control circuit 12.

The detection circuit 11 comprises: an extreme position detection sensor in a first rotation plane and an extreme position detection sensor in a second rotation plane, wherein the first rotation plane and the second rotation plane are two planes perpendicular to each other; and the sensors are angle sensors and/or limit sensors.

In this embodiment, the first rotation plane and the second rotation plane are respectively a horizontal rotation surface of a base of the onboard intelligent controller and a vertical rotation surface of a head of the onboard intelligent controller.

One angle sensor may be used to detect whether the left or right extreme position is reached during horizontal rotation, and another angle sensor may be used to detect whether the upper or lower extreme position is reached during vertical rotation. A limit sensor may also be arranged at each of the upper, lower, left, and right extreme positions for detection. Certainly, it is also possible that one angle sensor is used in one of the rotation planes while two limit sensors are used in another rotation plane for detection. The limit sensor may be: a photoelectric proximity switch, an inductive proximity switch, a capacitive proximity switch, a Hall proximity switch, or the like.

In this embodiment, the extreme position detection sensor in the first rotation plane comprises a left extreme detection sensor 111 and a right extreme detection sensor 112; the extreme position detection sensor in the second rotation plane comprises an upper extreme detection sensor 113 and a lower extreme detection sensor 114; and the four limit sensors are all high-precision photoelectric proximity switches.

The left extreme detection sensor 111 is configured to detect whether the base of the onboard intelligent controller rotates to a left extreme position; the right extreme detection sensor 112 is configured to detect whether the base of the onboard intelligent controller rotates to a right extreme position; the upper extreme detection sensor 113 is configured to detect whether the head of the onboard intelligent controller rotates to an upper extreme position; and the lower extreme detection sensor 114 is configured to detect whether the head of the onboard intelligent controller rotates to a lower extreme position.

In this embodiment, the left extreme detection sensor 111 and the right extreme detection sensor 112 are arranged at extreme positions respectively when the base of the onboard intelligent controller rotates to the left and right along a horizontal plane; and the upper extreme detection sensor 113 and the lower extreme detection sensor 114 are arranged at extreme positions respectively when the head of the onboard intelligent controller rotates up and down along a vertical plane.

In this embodiment, the control circuit 12 comprises: a microcontroller 121, wherein the microcontroller 121 is configured to: receive the result of the detection from the detection circuit 11, and control the prompt circuit 13 to give a corresponding alarm prompt according to the result of the detection.

In this embodiment, the prompt circuit 13 gives a prompt in one or more prompt manner; and the prompt manners comprise: a voice, lamplight, text displayed on a screen, and an expression displayed on the screen.

The prompt circuit 13 comprises: a display screen drive circuit 131, a display screen 132, a backlight drive circuit 133, a voice drive circuit 134 and a loudspeaker 135.

The display screen drive circuit 131 is configured to drive, according to the instruction from the control circuit 12, the display screen 132 to display the text, a graphic, or the expression; the backlight drive circuit 133 is configured to adjust the brightness of a backlight of the display screen 132 according to the instruction from the control circuit 12; and the voice drive circuit 134 is configured to drive the output from the loudspeaker 135 according to the instruction from the control circuit 12.

For example, a user manually rotates the onboard intelligent controller to the left extreme position in a horizontal direction, and in this case, the left extreme detection sensor 111 will send a signal to the control circuit 12; and the control circuit 12 may then control the prompt circuit 13 to issue a corresponding voice "has reached the left extreme position, and don't continue rotating in case of device damage!", and may also give a reminder to the user by means of flickering the backlight, or displaying the text "No rotating" and a painful expression on the screen of the onboard intelligent controller, or the like. One or more of the above-mentioned prompt manners may be used at the same time.

### Embodiment II of loss prevention apparatus:

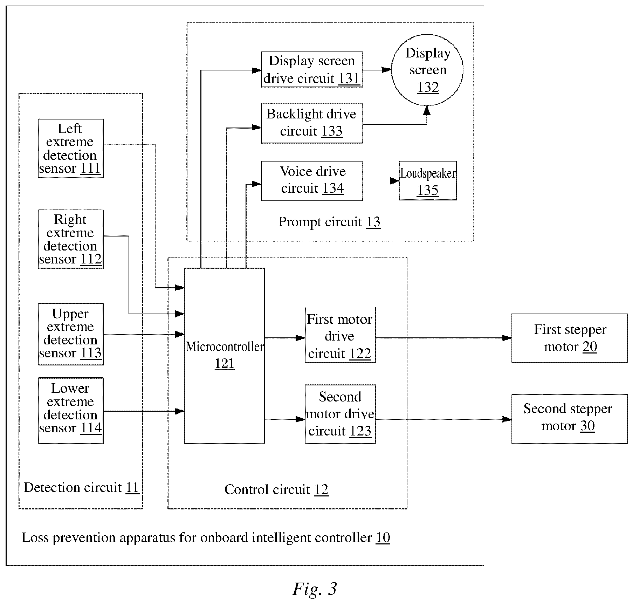

FIG. 3 is a schematic composition diagram of Embodiment II of a loss prevention apparatus for a rotatable onboard intelligent controller according to the invention. As shown in FIG. 3, in this embodiment, a detection circuit 11 and a prompt circuit 13 are the same as those in Embodiment I, except that in addition to the microcontroller 121, the control circuit 12 further comprises: a first motor drive circuit 122 and a second motor drive circuit 123.

In this embodiment, the control circuit 12 is further configured to: when the onboard intelligent controller rotates to an extreme position, control the first motor drive circuit 122 to rotate a first stepper motor 20, thereby rotating the base of the onboard intelligent controller to a preset base position; and/or control the second motor drive circuit 123 to rotate a second stepper motor 30, thereby rotating the head of the onboard intelligent controller to a preset head position. In this way, the onboard intelligent controller is rotated back to the proper position as soon as possible to avoid damage.

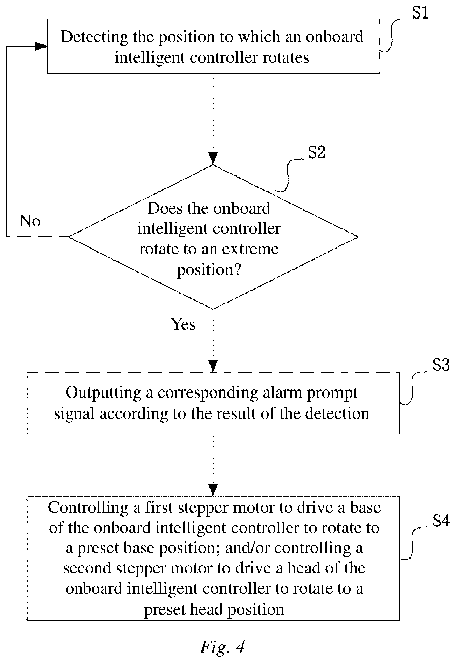

FIG. 4 is a schematic flowchart of an embodiment of a loss prevention method for a rotatable onboard intelligent controller according to the invention. In this embodiment, based on Embodiment II of the loss prevention apparatus for a rotatable onboard intelligent controller as described above, as shown in FIG. 4, the loss prevention method comprises the following steps:
detecting whether the onboard intelligent controller rotates to an extreme position; and
outputting an alarm prompt signal if the onboard intelligent controller rotates to the extreme position.
Step S1, detecting the position to which an onboard intelligent controller rotates;
step S2, determining the result of the detection, and proceeding to step S3 if the onboard intelligent controller rotates to an extreme position, otherwise proceeding to step S1;
step S3, outputting a corresponding alarm prompt signal according to the result of the detection; and
step S4, controlling a first stepper motor to drive a base of the onboard intelligent controller to rotate to a preset base position; and/or controlling a second stepper motor to drive a head of the onboard intelligent controller to rotate to a preset head position.

For example, if it is detected that the head thereof is rotated to an upper extreme position, a voice prompt may be first given to stop the user from rotating same; and then the second stepper motor is controlled to rotate the head to the preset head position. At this time, since the base part has not reached the extreme position, the base may not be rotated, or the first stepper motor may be controlled to rotate the base also to the preset base extreme position.

In an embodiment of the invention, a storage device is provided, in which a plurality of programs are stored, wherein the programs are adapted to be loaded and executed by a processor, so as to implement the loss prevention method for a rotatable onboard intelligent controller as described above.

In an embodiment of the invention, a processing device is provided, which comprises: a processor and a storage device,
wherein
the processor is adapted to execute various programs; and the storage device is adapted to store a plurality of programs, wherein the programs are adapted to be loaded and executed by the processor to implement: the loss prevention method for a rotatable onboard intelligent controller as described above.

In various examples of this application, an electrical connection may be implemented via a wire or in a wireless manner, as long as the function of signal transmission by the detection circuit 11, the control circuit 12, and the prompt circuit 13 can be achieved.

A person skilled in the art should be able to realize that the method steps of the various examples described with reference to the embodiments disclosed herein can be implemented in electronic hardware, computer software or a combination of both. To clearly illustrate the interchangeability of electronic hardware and software, the compositions and steps of the various examples have been generally described in terms of functionality in the above description. Whether these functions are performed in the form of electronic hardware or software depends on the specific application and design constraints of the technical solution. A person skilled in the art can use different methods to implement the described functions for each particular application, but such implementation should not be considered to be beyond the scope of the invention.

Heretofore, the technical solutions of the invention have been described with reference to the preferred embodiments shown in the accompanying drawings; however, a person skilled in the art can readily understand that the scope of protection of the invention is obviously not limited to these particular embodiments.

## Claims

1. A loss prevention apparatus (10) for a rotatable onboard intelligent controller (1), comprising: a detection circuit (11), a control circuit (12), and a prompt circuit (13), wherein the detection circuit (11), the control circuit (12), and the prompt circuit (13) are electrically connected in sequence; this apparatus being **characterised by**
the detection circuit is configured to detect whether the onboard intelligent controller (1) rotates to an extreme position, and send the result of the detection to the control circuit (12); the extreme position is a preset limit position to which the onboard intelligent controller (1) rotates;
the control circuit (12) is configured to send an alarm instruction to the prompt circuit (13) when obtaining the result of the detection indicating that the onboard intelligent controller (1) rotates to the extreme position; and
the prompt circuit (13) is configured to give a corresponding alarm prompt according to the alarm instruction from the control circuit (12).

2. The loss prevention apparatus (10) according to claim 1, **characterized in that** the detection circuit (11) comprises an extreme position detection sensor (111,112) in a first rotation plane and an extreme position detection sensor (113,114) in a second rotation plane,
wherein the first rotation plane and the second rotation plane are two planes perpendicular to each other; and
the sensors are angle sensors and/or limit sensors.

3. The loss prevention apparatus (10) according to claim 2, **characterized in that** the first rotation plane and the second rotation plane are respectively a horizontal rotation surface of a base of the onboard intelligent controller (1) and a vertical rotation surface of a head of the onboard intelligent controller (1);
the extreme position detection sensor (111,112) in the first rotation plane comprises a left extreme detection sensor (111) and a right extreme detection sensor (112);
the extreme position detection sensor (113,114) in the second rotation plane comprises an upper extreme detection sensor (113) and a lower extreme detection sensor (114);
the left extreme detection sensor (111) and the right extreme detection sensor (112) are respectively configured to detect whether the base of the onboard intelligent controller (1) rotates to a left extreme position and a right extreme position; and
the upper extreme detection sensor (113) and the lower extreme detection sensor (114) are respectively configured to detect whether the head of the onboard intelligent controller (1) rotates to an upper extreme position and a lower extreme position.

4. The loss prevention apparatus (10) according to claim 3, **characterized in that** the left extreme detection sensor (111), the right extreme detection sensor (112), the upper extreme detection sensor (113) and the lower extreme detection sensor (114) are all photoelectric sensors.

5. The loss prevention apparatus (10) according to claim 4, **characterized in that** the left extreme detection sensor (111) and the right extreme detection sensor (112 are arranged at extreme positions respectively when the base of the onboard intelligent controller (1) rotates to the left and right along a horizontal plane; and the upper extreme detection sensor (113) and the lower extreme detection sensor (114) are arranged at extreme positions respectively when the head of the onboard intelligent controller (1) rotates up and down along a vertical plane.

6. The loss prevention apparatus (10) according to claim 1, **characterized in that** the control circuit (12) comprises: a microcontroller (121),
wherein the microcontroller (121) is configured to: receive the result of the detection from the detection circuit (11), and control the prompt circuit (13) to give a corresponding alarm prompt according to the result of the detection.

7. The loss prevention apparatus (10) according to claim 1, **characterized in that** the prompt circuit (13) gives a prompt in one or more prompt manners; and the prompt manners comprise: a voice, lamplight, text displayed on a screen (132), and an expression displayed on the screen (132).

8. The loss prevention apparatus (10) according to claim 7, **characterized in that** the prompt circuit (13) comprises: a display screen drive circuit (131), a display screen (132), a backlight drive circuit (133), a voice drive circuit (134) and a loudspeaker (135),
wherein the display screen drive circuit (131) is configured to drive, according to the instruction from the control circuit (12), the display screen (132) to display the text, a graphic, or the expression;
the backlight drive circuit (132) is configured to adjust the brightness of a backlight of the display screen (132) according to the instruction from the control circuit (12); and
the voice drive circuit (134) is configured to drive the output from the loudspeaker (135) according to the instruction from the control circuit (12).

9. The loss prevention apparatus (10) according to any one of claims 1 to 8, **characterized in that** the control circuit (12) further comprises: a first motor drive circuit (122) and a second motor drive circuit (123); and
the control circuit (12) is further configured to: when the onboard intelligent controller (1) rotates to the extreme position, control the first motor drive circuit (122) to rotate a first stepper motor (20), thereby rotating the base of the onboard intelligent controller to a preset base position; and/or control the second motor drive circuit (123) to rotate a second stepper motor (30), thereby rotating the head of the onboard intelligent controller (1) to a preset head position.

10. A loss prevention method for a rotatable onboard intelligent controller (1), **characterized by** comprising, based on a loss prevention apparatus (10) for a rotatable onboard intelligent controller according to any one of claims 1 to 9, the following steps:
detecting whether the onboard intelligent controller (1) rotates to an extreme position; and
outputting an alarm prompt signal if the onboard intelligent controller (1) rotates to the extreme position.

11. The loss prevention method according to claim 10, **characterized in that** after "outputting an alarm prompt signal", the method further comprises:
controlling a first stepper motor (20) to drive a base of the onboard intelligent controller (1) to rotate to a preset base position; and/or controlling a second stepper motor (30) to drive a head of the onboard intelligent controller (1) to rotate to a preset head position.

12. A storage device in which a plurality of programs are stored, **characterized in that** the programs are adapted to be loaded and executed by a processor (121), so as to implement a loss prevention method for a rotatable onboard intelligent controller (1) according to either of claims 10 and 11.

13. A processing device, comprising:
a processor (121) adapted to execute various programs; and
a storage device adapted to store a plurality of programs,
**characterized in that** the programs are adapted to be loaded and executed by the processor (121) to implement:
a loss prevention method for a rotatable onboard intelligent controller (1) according to either of claims 10 and 11.

## Patentansprüche

1. Verlustvermeidungsvorrichtung (10) für eine drehbare bordeigene intelligente Steuerung (1), umfassend: eine Erkennungsschaltung (11), eine Steuerschaltung (12) und eine Aufforderungsschaltung (13), wobei die Erkennungsschaltung (11), die Steuerschaltung (12) und die Aufforderungsschaltung (13) elektrisch nacheinander verbunden sind;
wobei diese Vorrichtung **dadurch gekennzeichnet, dass**
die Erkennungsschaltung dafür ausgelegt ist, zu erkennen, ob sich die bordeigene intelligente Steuerung (1) in eine Extremposition dreht, und das Ergebnis der Erkennung an die Steuerschaltung (12) zu senden; wobei die Extremposition eine voreingestellte Grenzposition ist, in die sich die bordeigene intelligente Steuerung (1) dreht;
die Steuerschaltung (12) dafür ausgelegt ist, eine Alarmanweisung an die Aufforderungsschaltung (13) zu senden, wenn sie das Ergebnis der Erkennung mit der Angabe erhält, dass sich die bordeigene intelligente Steuerung (1) in die Extremposition dreht; und
die Aufforderungsschaltung (13) dafür ausgelegt ist, eine entsprechende Alarmaufforderung gemäß der Alarmanweisung von der Steuerschaltung (12) auszugeben.

2. Verlustvermeidungsvorrichtung (10) nach Anspruch 1, **dadurch gekennzeichnet, dass** die Erkennungsschaltung (11) einen Extrempositionserkennungssensor (111, 112) in einer ersten Drehebene und einen Extrempositionserkennungssensor (113, 114) in einer zweiten Drehebene umfasst,
wobei die erste Drehebene und die zweite Drehebene zwei Ebenen sind, die senkrecht zueinander stehen; und
die Sensoren Winkelsensoren und/oder Grenzwertsensoren sind.

3. Verlustvermeidungsvorrichtung (10) nach Anspruch 2, **dadurch gekennzeichnet, dass** die erste Drehebene und die zweite Drehebene jeweils eine horizontale Drehfläche einer Basis der bordeigenen intelligenten Steuerung (1) und eine vertikale Drehfläche eines Kopfes der bordeigenen intelligenten Steuerung (1) sind;
der Extrempositionserkennungssensor (111, 112) in der ersten Drehebene einen Erkennungssensor (111) für die linke Extremposition und einen Erkennungssensor (112) für die rechte Extremposition umfasst;
der Extrempositionserkennungssensor (113, 114) in der zweiten Drehebene einen Erkennungssensor (113) für die obere Extremposition und einen Erkennungssensor (114) für die untere Extremposition umfasst;
der Erkennungssensor (111) für die linke Extremposition und der Erkennungssensor (112) für die rechte Extremposition jeweils zum Erkennen ausgelegt sind, ob sich die Basis der bordeigenen intelligenten Steuerung (1) zu einer linken Extremposition bzw. einer rechten Extremposition dreht; und
der Erkennungssensor (113) für die obere Extremposition und der Erkennungssensor (114) für die untere Extremposition jeweils zum Erkennen ausgelegt sind, ob sich der Kopf der bordeigenen intelligenten Steuerung (1) zu einer oberen Extremposition bzw. einer unteren Extremposition dreht.

4. Verlustvermeidungsvorrichtung (10) nach Anspruch 3, **dadurch gekennzeichnet, dass** der Erkennungssensor (111) für die linke Extremposition, der Erkennungssensor (112) für die rechte Extremposition, der Erkennungssensor (113) für die obere Extremposition und der Erkennungssensor (114) für die untere Extremposition alle photoelektrische Sensoren sind.

5. Verlustvermeidungsvorrichtung (10) nach Anspruch 4, **dadurch gekennzeichnet, dass** der Erkennungssensor (111) für die linke Extremposition und der Erkennungssensor (112) für die rechte Extremposition jeweils an Extrempositionen angeordnet sind, wenn sich die Basis der bordeigenen intelligenten Steuerung (1) nach links und rechts entlang einer horizontalen Ebene dreht; und der Erkennungssensor (113) für die obere Extremposition und der Erkennungssensor (114) für die untere Extremposition jeweils an Extrempositionen angeordnet sind, wenn sich der Kopf der bordeigenen intelligenten Steuerung (1) entlang einer vertikalen Ebene nach oben und unten dreht.

6. Verlustvermeidungsvorrichtung (10) nach Anspruch 1, **dadurch gekennzeichnet, dass** die Steuerschaltung (12) umfasst: einen Mikrocontroller (121),
wobei der Mikrocontroller (121) für folgende Vorgänge ausgelegt ist: Empfangen des Ergebnisses der Erkennung von der Erkennungsschaltung (11) und Steuern der Aufforderungsschaltung (13) zur Ausgabe einer entsprechenden Alarmaufforderung gemäß dem Ergebnis der Erkennung.

7. Verlustvermeidungsvorrichtung (10) nach Anspruch 1, **dadurch gekennzeichnet, dass** die Aufforderungsschaltung (13) eine Aufforderung in einer oder mehreren Aufforderungsarten ausgibt; und die Aufforderungsarten umfassen:
eine Stimme, Leuchtenlicht, auf einem Bildschirm (132) angezeigten Text und
einen auf dem Bildschirm (132) angezeigten Ausdruck.

8. Verlustvermeidungsvorrichtung (10) nach Anspruch 7, **dadurch gekennzeichnet, dass** die Aufforderungsschaltung (13) umfasst: eine Anzeigebildschirmansteuerungsschaltung (131), einen Anzeigebildschirm (132), eine Hintergrundbeleuchtungsansteuerungsschaltung (133), eine Sprachansteuerungsschaltung (134) und einen Lautsprecher (135),
wobei die Anzeigebildschirmansteuerungsschaltung (131) dafür ausgelegt ist, gemäß der Anweisung von der Steuerschaltung (12) den Anzeigebildschirm (132) zum Anzeigen des Textes, einer Grafik oder des Ausdrucks anzusteuern;
die Hintergrundbeleuchtungsansteuerungsschaltung (132) dafür ausgelegt ist, die Helligkeit einer Hintergrundbeleuchtung des Anzeigebildschirms (132) gemäß der Anweisung von der Steuerschaltung (12) einzustellen; und
die Sprachansteuerungsschaltung (134) dafür ausgelegt ist, die Ausgabe des Lautsprechers (135) gemäß der Anweisung von der Steuerschaltung (12) anzusteuern.

9. Verlustvermeidungsvorrichtung (10) nach einem der Ansprüche 1 bis 8, **dadurch gekennzeichnet, dass** die Steuerschaltung (12) ferner umfasst: eine erste Motoransteuerungsschaltung (122) und eine zweite Motoransteuerungsschaltung (123); und
die Steuerschaltung (12) ferner für folgende Vorgänge ausgelegt ist: wenn sich die bordeigene intelligente Steuerung (1) in die Extremposition dreht, Steuern der ersten Motoransteuerungsschaltung (122) zum Drehen eines ersten Schrittmotors (20), wodurch die Basis der bordeigenen intelligenten Steuerung in eine voreingestellte Basisposition gedreht wird; und/oder Steuern der zweite Motoransteuerungsschaltung (123) zum Drehen eines zweiten Schrittmotors (30), wodurch der Kopf der bordeigenen intelligenten Steuerung (1) in eine voreingestellte Kopfposition gedreht wird.

10. Verlustvermeidungsverfahren für eine drehbare bordeigene intelligente Steuerung (1), **dadurch gekennzeichnet, dass** es auf der Grundlage einer Verlustvermeidungsvorrichtung (10) für eine drehbare bordeigene intelligente Steuerung nach einem der Ansprüche 1 bis 9 die folgenden Schritte umfasst:
Erkennen, ob sich die bordeigene intelligente Steuerung (1) in eine Extremposition dreht; und
Ausgeben eines Alarmaufforderungssignals, wenn sich die bordeigene intelligente Steuerung (1) in die Extremposition dreht.

11. Verlustvermeidungsverfahren nach Anspruch 10, **dadurch gekennzeichnet, dass** das Verfahren nach dem "Ausgeben eines Alarmaufforderungssignals" ferner umfasst:
Steuern eines ersten Schrittmotors (20) zum Ansteuern einer Basis der bordeigenen intelligenten Steuerung (1) zum Drehen in eine voreingestellte Basisposition; und/oder Steuern eines zweiten Schrittmotors (30) zum Ansteuern eines Kopfes der bordeigenen intelligenten Steuerung (1) zum Drehen in eine voreingestellte Kopfposition.

12. Speichervorrichtung, in der eine Vielzahl von Programmen gespeichert ist, **dadurch gekennzeichnet, dass** die Programme dazu eingerichtet sind, von einem Prozessor (121) geladen und ausgeführt zu werden, zu dem Zweck, ein Verlustvermeidungsverfahren für eine drehbare bordeigene intelligente Steuerung (1) nach einem der Ansprüche 10 und 11 zu implementieren.

13. Verarbeitungsvorrichtung, umfassend:
einen Prozessor (121), der zum Ausführen verschiedener Programme eingerichtet ist; und
eine Speichervorrichtung, die zum Speichern einer Vielzahl von Programmen eingerichtet ist,
**dadurch gekennzeichnet, dass** die Programme dazu eingerichtet sind, vom Prozessor (121) geladen und ausgeführt zu werden, um Folgendes zu implementieren:
ein Verlustvermeidungsverfahren für eine drehbare bordeigene intelligente Steuerung (1) nach einem der Ansprüche 10 und 11.

## Revendications

1. Appareil de prévention de perte (10) pour un dispositif de commande intelligent embarqué rotatif (1), comprenant : un circuit de détection (11), un circuit de commande (12) et un circuit d'invite (13), dans lequel le circuit de détection (11), le circuit de commande (12) et le circuit d'invite (13) sont connectés électriquement en séquence ; cet appareil étant **caractérisé en ce que**
le circuit de détection est configuré pour détecter si oui ou non le dispositif de commande intelligent embarqué (1) tourne vers une position extrême, et envoyer le résultat de la détection au circuit de commande (12) ; la position extrême est une position limite prédéfinie vers laquelle le dispositif de commande intelligent embarqué (1) tourne ;
le circuit de commande (12) est configuré pour envoyer une instruction d'alarme au circuit d'invite (13) lors de l'obtention du résultat de la détection indiquant que le dispositif de commande intelligent embarqué (1) tourne vers la position extrême ; et
le circuit d'invite (13) est configuré pour produire une invite d'alarme correspondante en fonction de l'instruction d'alarme provenant du circuit de commande (12).

2. Appareil de prévention de perte (10) selon la revendication 1, **caractérisé en ce que** le circuit de détection (11) comprend un capteur de détection de position extrême (111, 112) dans un premier plan de rotation et un capteur de détection de position extrême (113, 114) dans un second plan de rotation,
dans lequel le premier plan de rotation et le second plan de rotation sont deux plans perpendiculaires l'un à l'autre ; et
les capteurs sont des capteurs d'angle et/ou des capteurs de limite.

3. Appareil de prévention de perte (10) selon la revendication 2, **caractérisé en ce que** le premier plan de rotation et le second plan de rotation sont respectivement une surface de rotation horizontale d'une base du dispositif de commande intelligent embarqué (1) et une surface de rotation verticale d'une tête du dispositif de commande intelligent embarqué (1) ;
le capteur de détection de position extrême (111, 112) dans le premier plan de rotation comprend un capteur de détection extrême gauche (111) et un capteur de détection extrême droit (112) ;
le capteur de détection de position extrême (113, 114) dans le second plan de rotation comprend un capteur de détection extrême supérieur (113) et un capteur de détection extrême inférieur (114) ;
le capteur de détection extrême gauche (111) et le capteur de détection extrême droit (112) sont respectivement configurés pour détecter si oui ou non la base du dispositif de commande intelligent embarqué (1) tourne vers une position extrême gauche et une position extrême droite ; et
le capteur de détection extrême supérieur (113) et le capteur de détection extrême inférieur (114) sont respectivement configurés pour détecter si oui ou non la tête du dispositif de commande intelligent embarqué (1) tourne vers une position extrême supérieure et une position extrême inférieure.

4. Appareil de prévention de perte (10) selon la revendication 3, **caractérisé en ce que** le capteur de détection extrême gauche (111), le capteur de détection extrême droit (112), le capteur de détection extrême supérieur (113) et le capteur de détection extrême inférieur (114) sont tous des capteurs photoélectriques.

5. Appareil de prévention de perte (10) selon la revendication 4, **caractérisé en ce que** le capteur de détection extrême gauche (111) et le capteur de détection extrême droit (112) sont disposés aux positions extrêmes respectivement lorsque la base du dispositif de commande intelligent embarqué (1) tourne vers la gauche et la droite le long d'un plan horizontal ; et le capteur de détection extrême supérieur (113) et le capteur de détection extrême inférieur (114) sont disposés aux positions extrêmes respectivement lorsque la tête du dispositif de commande intelligent embarqué (1) tourne vers le haut et vers le bas le long d'un plan vertical.

6. Appareil de prévention de perte (10) selon la revendication 1, **caractérisé en ce que** le circuit de commande (12) comprend : un microcontrôleur (121),
dans lequel le microcontrôleur (121) est configuré pour : recevoir le résultat de la détection depuis le circuit de détection (11), et commander le circuit d'invite (13) pour qu'il produise une invite d'alarme correspondante en fonction du résultat de la détection.

7. Appareil de prévention de perte (10) selon la revendication 1, **caractérisé en ce que** le circuit d'invite (13) produit une invite d'une ou plusieurs manières ; et les manières comprennent : une voix, une lumière, un texte affiché sur un écran (132) et une expression affichée sur l'écran (132).

8. Appareil de prévention de perte (10) selon la revendication 7, **caractérisé en ce que** le circuit d'invite (13) comprend : un circuit d'entraînement d'écran d'affichage (131), un écran d'affichage (132), un circuit d'entraînement de rétroéclairage (133), un circuit d'entraînement vocal (134) et un haut-parleur (135),
dans lequel le circuit d'entraînement d'écran d'affichage (131) est configuré pour entraîner, en fonction de l'instruction provenant du circuit de commande (12), l'écran d'affichage (132) à afficher le texte, un graphique ou l'expression ;
le circuit d'entraînement de rétroéclairage (132) est configuré pour régler la luminosité d'un rétroéclairage de l'écran d'affichage (132) en fonction de l'instruction provenant du circuit de commande (12) ; et
le circuit d'entraînement vocal (134) est configuré pour entraîner la sortie depuis le haut-parleur (135) en fonction de l'instruction provenant du circuit de commande (12).

9. Appareil de prévention de perte (10) selon l'une quelconque des revendications 1 à 8, **caractérisé en ce que** le circuit de commande (12) comprend en outre : un premier circuit d'entraînement de moteur (122) et un second circuit d'entraînement de moteur (123) ; et
le circuit de commande (12) est en outre configuré pour : lorsque le dispositif de commande intelligent embarqué (1) tourne vers la position extrême, commander le premier circuit d'entraînement de moteur (122) pour faire tourner un premier moteur pas à pas (20), faisant ainsi tourner la base du dispositif de commande intelligent embarqué vers une position de base prédéfinie ; et/ou commander le second circuit d'entraînement de moteur (123) pour faire tourner un second moteur pas à pas (30), faisant ainsi tourner la tête du dispositif de commande intelligent embarqué (1) vers une position de tête prédéfinie.

10. Procédé de prévention de perte pour un dispositif de commande intelligent embarqué rotatif (1), **caractérisé en ce qu'**il comprend, sur la base d'un appareil de prévention de perte (10) pour un dispositif de commande intelligent embarqué selon l'une quelconque des revendications 1 à 9, les étapes suivantes :
la détection de si oui ou non le dispositif de commande intelligent embarqué (1) tourne vers une position extrême ; et
la sortie d'un signal d'invite d'alarme si le dispositif de commande intelligent embarqué (1) tourne vers la position extrême.

11. Procédé de prévention de perte selon la revendication 10, **caractérisé en ce qu'**après la « sortie d'un signal d'invite d'alarme », le procédé comprend en outre :
la commande d'un premier moteur pas à pas (20) pour entraîner une base du dispositif de commande intelligent embarqué (1) à tourner vers une position de base prédéfinie ; et/ou la commande d'un second moteur pas à pas (30) pour entraîner une tête du dispositif de commande intelligent embarqué (1) à tourner vers une position de tête prédéfinie.

12. Dispositif de stockage dans lequel une pluralité de programmes sont stockés, **caractérisé en ce que** les programmes sont conçus pour être chargés et exécutés par un processeur (121), de façon à mettre en œuvre un procédé de prévention de perte pour un dispositif de commande intelligent embarqué rotatif (1) selon l'une des revendications 10 et 11.

13. Dispositif de traitement, comprenant :
un processeur (121) conçu pour exécuter divers programmes ; et
un dispositif de stockage conçu pour stocker une pluralité de programmes,
**caractérisé en ce que** les programmes sont conçus pour être chargés et exécutés par le processeur (121) pour mettre en oeuvre :
un procédé de prévention de perte pour un dispositif de commande intelligent embarqué rotatif (1) selon l'une des revendications 10 et 11.
